# EUROPÄISCHE PATENTSCHRIFT

(11) **EP 1 673 667 B1**
(45) Veröffentlichungstag und Bekanntmachung des Hinweises auf die Patenterteilung: **29.07.2009**
(21) Anmeldenummer: 04791179.7
(22) Anmeldetag: 08.10.2004
(51) Int. Cl.: G05B 19/042, G05B 9/03

(54) **INTEGRIERTES MIKROPROZESSORSYSTEM FÜR SICHERHEITSKRITISCHE REGELUNGEN**
INTEGRATED MICROPROCESSOR SYSTEM FOR SAFETY-CRITICAL REGULATIONS
SYSTEME DE MICROPROCESSEUR INTEGRE POUR REGULATIONS CRITIQUES EN TERMES DE SECURITE

(30) Priorität: 08.10.2003 DE 10347310
(43) Veröffentlichungstag der Anmeldung: 28.06.2006
(73) Patentinhaber: Continental Teves AG & Co. oHG, 60488 Frankfurt am Main (DE)
(72) Erfinder: FEY, Wolfgang, 65527 Niedernhausen (DE); ZYDEK, Michael, 60529 Frankfurt/Main (DE)
(86) Internationale Anmeldenummer: PCT/EP2004/052477
(87) Internationale Veröffentlichungsnummer: WO 2005/036285

(56) Entgegenhaltungen:
- WO-A-03/050624
- DE-A- 10 053 820
- US-A- 5 793 093

## Beschreibung

Die Erfindung betrifft eine integrierte Schaltungsanordnung gemäß Anspruch 1 sowie dessen Verwendung in elektronischen Bremssystemen für Kraftfahrzeuge oder in elektronischen Steuerungen zur Regelung der Fahrdynamik von Kraftfahrzeugen oder zur Steuerung von elektronisch gesteuerten Feststellbremsen oder zur Steuerung von Fahrzeugrückhaltesystemen, wie beispielsweise Airbagsteuerungen.

Mikroprozessorsysteme für sicherheitskritische Regelungen sind beispielsweise aus der DE 197 16 197 A1 bekannt. Die dort offenbarten Mikroprozessorsysteme weisen eine redundante Datenverarbeitung auf, um für sicherheitskritische Anwendungen, wie ABS- oder ESP-Steuergeräte geeignet zu sein. Zur Herstellung von Redundanz enthält das Mikroprozessorsystem duplizierte Funktionsgruppen auf, welche jeweils Zentraleinheiten (CPU's), Busssysteme und weitere Funktionsgruppen, wie Speicher und Eingabe-/Ausgabekomponenten (I/O) umfassen. Durch spezielle Vergleicher und Bypässe, welche Vergleiche der Daten der Ausgangsdaten oder Ausgangssignale der Zentraleinheiten durchführen, lässt sich die ordnungsgemäße Funktion der Funktionsgruppen überprüfen.

Zu den sicherheitskritischen Regelungen gemäß der Erfindung zählen u.a. die in die Bremsenfunktion eines Kraftfahrzeugs eingreifenden Regelungssysteme, die in großer Anzahl und großer Vielfalt auf dem Markt sind. Beispiele hierfür sind die Antiblockiersysteme (ABS), Antriebsschlupfregelungssysteme (ASR), Fahrstabilitätsregelungen (ESP, TCS, FDR, ASMS), Fahrwerksregelungssysteme, aber auch Steuergeräte für Feststellbremsen und Rückhaltesysteme etc. Zum Beispiel würde ein Ausfall eines ESP-Regelungssystems zu einer Gefährdung der Fahrstabilität des Fahrzeugs führen. Deshalb wird die Funktionsfähigkeit der Systeme ständig überwacht, um beim Auftreten eines Fehlers die Regelung abschalten ("fault silent") oder in einen für die Sicherheit weniger gefährlichen Zustand umschalten ("fault tolerant") zu können.

Die Überwachung der ordnungsgemäßen Funktion von integrierten Schaltkreisen ist bei einer Anwendung in Bremssysteme bzw. Kraftfahrzeug-Regelungssystemen, bei denen bei Ausfall der Elektronik keine Umschaltung auf ein mechanisches oder hydraulisches System möglich ist, noch um einiges wichtiger. Hierzu zählen aktuelle Bremssystemkonzepte, wie "brake-bywire"; die Bremsenfunktion ist bei solchen Systemen auf einen intakten elektronischen Schaltkreis angewiesen, so dass für diese Bremssysteme die mit einem fehlertoleranten Redundanzkonzept ("fault tolerant") ausgelegten Mikroprozessorsysteme von besonderer Bedeutung sind.

Ein solches fehlertolerantes System ist aus der WO 03/050624 A1 bekannt, bei dem ein redundantes Mikroprozessorsystem sowie Aktuatortreiber und Sicherheitsschaltkreise auf einem Chip oder Chipträger integriert sind. Bei Ausfall eines Mikroprozessorsystems wird dieses vom Fahrzeugdatenbus getrennt, wobei das redundante Mikroprozessorsystem die Funktion aufrecht erhält.

Ein weiteres Beispiel für eine Schaltungsanordnung oder ein Mikroprozessorsystem zur Steuerung und Überwachung einer blockiergeschützten Fahrzeugbremsanlage ist aus der DE 32 34 637 C2 bekannt. Nach dieser Schrift werden die Eingangsdaten zweier identisch programmierter Mikrocomputer parallel zugeführt und dort synchron verarbeitet. Die Ausgangssignale und Zwischensignale der beiden Mikrocomputern werden mit Hilfe von redundanten Vergleichern auf Übereinstimmung geprüft. Wenn die Signale voneinander abweichen, wird über eine ebenfalls redundant ausgelegte Schaltung eine Abschaltung der Regelung herbeigeführt. Bei dieser bekannten Schaltung dient einer der beiden Mikrocomputer zur Erzeugung der Bremsdrucksteuersignale, der andere zur Bildung der Prüfsignale. Bei diesem symmetrisch aufgebauten Mikroprozessorsystem sind also zwei vollständige Mikrocomputer, einschließlich der zugehörigen Festwert- und Schreib-Lese-Speicher, erforderlich.

Nach einem anderen bekannten System, nach dem die in der DE 41 37 124 A1 beschriebene Schaltung aufgebaut ist, werden die Eingangsdaten ebenfalls zwei Mikrocomputern parallel zugeführt, von denen jedoch nur einer die vollständige, aufwendige Signalverarbeitung ausführt. Der zweite Mikrocomputer dient vornehmlich zur Überwachung, weshalb die Eingangssignale nach Aufbereitung, Bildung von zeitlichen Ableitungen etc. mit Hilfe vereinfachter Regelalgorithmen und vereinfachter Regelphilosophie weiterverarbeitet werden können. Die vereinfachte Datenverarbeitung reicht zur Erzeugung von Signalen aus, die durch Vergleich mit den in dem aufwendigeren Mikrocomputer verarbeiteten Signalen Rückschlüsse auf den ordnungsgemäßen Betrieb des Systems zulassen. Durch die Verwendung eines Prüf-Mikrocomputers geringerer Leistungsfähigkeit lässt sich der Herstellungsaufwand im Vergleich zu einem System mit zwei vollständigen, aufwendigen Mikrocomputern gleicher Leistung reduzieren.

Aus der DE 43 41 082 A1 ist bereits ein Mikroprozessorsystem bekannt, das insbesondere für das Regelsystem einer blockiergeschützten Bremsanlage vorgesehen ist. Dieses bekannte System, das auf einem einzigen Chip untergebracht werden kann, enthält zwei Zentraleinheiten, in denen die Eingangsdaten parallel verarbeitet werden. Die Festwert- und die Schreib-Lese-Speicher, die an die beiden Zentraleinheiten angeschlossen sind, enthalten zusätzliche Speicherplätze für Prüfinformationen und umfassen jeweils einen Generator zur Erzeugung von Prüfinformationen. Die Ausgangssignale eines der beiden Zentraleinheiten werden zur Erzeugung der Steuersignale weiterverarbeitet, während die andere als passive Zentraleinheit lediglich zur Überwachung der aktiven Zentraleinheit dient.

Bei den vorgenannten, bekannten Systemen wird also grundsätzlich die erforderliche Sicherheit durch Redundanz der Datenverarbeitung erreicht. Im ersten Fall (DE 32 34 637 C2) basiert das System auf der Verwendung von zwei Prozessoren mit identischer Software, was in Fachkreisen als symmetrische Redundanz bezeichnet wird. Im zweiten Fall (DE 41 37 124 A1) werden zwei Prozessoren mit unterschiedlicher Software verwendet (sog. asymmetrische Redundanz). Grundsätzlich ist es auch möglich, einen einzigen Prozessor zu verwerten, der auf Basis unterschiedlicher Algorithmen die Eingangsdaten verarbeitet, wobei dann zusätzliche Überprüfungsalgorithmen zum Feststellen eines fehlerfreien Arbeitens Anwendung finden.

Schließlich ist aus der DE 195 29 434 A1 (P7959) bereits ein System der eingangs genannten Art bekannt, das auch als System mit Kernredundanz bezeichnet wird. Bei diesem bekannten Mikroprozessorsystem sind zwei synchron betriebene Zentraleinheiten auf einem oder auf mehreren Chips vorgesehen, die die gleichen Eingangsinformationen erhalten und das gleiche Programm abarbeiten. Die beiden Zentraleinheiten sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. Bypässe verbunden sind, die den beiden Zentraleinheiten ein gemeinsames Lesen und Abarbeiten der zur Verfügung stehenden Daten, einschließlich der Prüfdaten und Befehle ermöglichen. Das System ermöglicht eine Einsparung von Speicherplatz. Nur eine der beiden Zentraleinheiten ist (direkt) mit einem vollwertigen Festwert- und einem Schreib-Lese-Speicher verbunden, während die Speicherkapazität des zweiten Prozessors auf Speicherplätze für Prüfdaten (Paritätsüberwachung) in Verbindung mit einem Prüfdatengenerator beschränkt ist. Zugriff zu allen Daten besteht über die Bypässe. Dadurch sind beide Zentraleinheiten in der Lage, jeweils das vollständige Programm abzuarbeiten.

Die vorstehend beschriebenen hochintegrierten und komplexen sicherheitskritischen Mikroprozessorsysteme wurden bisher nicht mit den zur Ansteuerung von energiezehrenden Verbrauchern, wie Ventilspulen zur hydraulischen Bremsdruckregelung, aktiven Bauelementen auf einem gemeinsamen Chip oder Chipträger zusammengefasst. Aus diesem Grund war es bisher notwendig, in den elektronischen Reglern für elektronische Bremssysteme mehrere integrierte Schaltkreise (z.B. IC' s bzw. separat gehäuste Chips) auf einem oder mehreren Leiterbahnträgern unterzubringen. Nur so konnten sowohl die für die eigentliche elektrohydraulische Funktion (z.B. Aktuatoransteuerung, redundante Endstufen, Treiber), als auch die für den Betrieb des Mikroprozessors notwendigen Failsafe-Baugruppen realisiert werden. Bei diesem 2-Chip-System enthält der erste Chip das redundante Mikrokoprozessorsystem und der zweite Chip umfasst sowohl digitale als auch analoge Schaltungsteile (mixed signal) mit Baugruppen zur Signalaufbereitung (signal conditioning), Aktuatoransteuerung und für die Behandlung der Failsafe-Funktionalität (z.B. Watchdog).

Die vorliegende Erfindung setzt sich zum Ziel, eine integrierte Schaltungsanordnung zur Verfügung zu stellen, die einerseits die bislang getrennten Schaltkreise auf einem gemeinsamen Chip oder Chipträger zusammenfasst und gleichzeitig in der Lage ist, bei praktisch jedem auftretenden Einzelfehler eine Erkennung dieses Fehlers zuverlässig zu ermöglichen.

Diese Aufgabe wird erfindungsgemäß durch die integrierte Schaltungsanordnung gemäß Anspruch 1 gelöst.

Der Erfindung liegt somit der Gedanke zugrunde, ein sogenanntes "Single Chip EBS System" zu schaffen, also beispielsweise eine Schaltungsanordnung für ein elektronisches Bremssystem, welche lediglich einen, gegen Fehler und äußere Störeinflüsse intern abgesicherten, fehlerredundanten, hochintegrierten Schaltkreis aufweist. Die erfindungsgemäße Schaltungsanordnung ist deshalb praktisch vollständig auf einem Stück eines Halbleitersubstrats (z.B. Silizium) realisierbar. Hierdurch lässt sich die sonst vielfach übliche Trennung von Leistungselektronik und hochintegrierten Schaltkreisen vermeiden.

Durch die vorgeschlagene Integration der bislang getrennten integrierten Schaltkreise ist eine überaus hohe Komplexität bei der Fehlererkennung und der Fehlertoleranz möglich. Bei Erkennung eines entsprechenden Fehlers wird vorzugsweise entweder in eine sogenannte sichere Rückfallebene zurückgeschaltet oder auf eine andere, funktionstüchtige Funktionsgruppe mit gleicher Funktion umgeschaltet oder die betreffende Funktionsgruppe stillgelegt (fault silent). Beispielsweise sind in der Rückfallebene noch bestimmte Software-Teilfunktionen des EBS auch in dem reduzierten Funktionsumfang durchführbar, jedoch sind andere Software-Funktionen je nach Tiefe der Rückfallebene nach und nach nicht mehr durchführbar. Die Schaltung weist insbesondere mehrere solcher Rückfallebenen auf, z.B. in der Reihenfolge ESP, ASR, ABS, wobei von links nach rechts die Anzahl der funktionstüchtigen Schaltungselemente abnimmt.

Zur weiteren Erhöhung der Sicherheit in den Gebieten zwischen den einzelnen getrennt deaktivierbaren Funktionsgruppen der integrierten Schaltungsanordnung werden Schutzzonen ausgebildet. Beispielsweise kann eine entsprechende Schutzzone ein Gebiet der integrierten Schaltungsanordnung sein, welches vorzugsweise sehr hochohmig im Vergleich zur Umgebung ist und als Isolation gegen Totalausfälle der verschiedenen Funktionsgruppen (IC's) auf dem Chip verwendet wird. Auf diese Weise ist es möglich, Fehler wie Überspannung, elektrostatische Spannungen (ESD), Überlastung, in einer Funktionsgruppe begrenzt zu halten, so dass die durch den Fehler hervorgerufenen Schäden nicht zu einer Beschädigung der in Nachbarschaft zu der beschädigten Funktionsgruppe liegenden Funktionsgruppen führen. Hierdurch kann erst ein sicheres Umschalten in den sicheren Modus durch den jeweils anderen noch funktionsfähigen Teil gewährleistet werden.

Die Schutzzonen werden bevorzugt als Guard-Ringe oder Trenches (beispielsweise Deep-Trenches) ausgebildet. Auch eine Kombination dieser beiden Isolationsmethoden kann für besondere Fälle zweckmäßig sein.

Die integrierte Schaltungsanordnung gemäß der Erfindung definiert einen Mikrokontroller, welcher praktisch alle notwendigen Analogschaltkreise umfasst, so dass sich diese bislang getrennten Funktionseinheiten auf einem gemeinsamen Chip oder Chipträger befinden. Der eingesetzte Chip oder Chipträger besteht bevorzugt im wesentlichen aus einem Halbleitermaterial, wie z.B. Silizium oder Germanium.

Das Layout der erfindungsgemäßen Schaltung wird bevorzugt so hergestellt, dass möglichst wenige leitende Verbindungen zwischen den einzelnen Funktionsgruppen und eine möglichst geringe Zahl von Leitungsüberschneidungen vorhanden sind. Auf diese Weise werden auch die sonst in hoher Zahl notwendigen ggf. vorhandenen Pufferstrukturen vermindert. Um dies zu erreichen, ist es besonders zweckmäßig, eine verbesserte Routingmethode anzuwenden, wie sie in der Patentanmeldung PCT/EP0200416 beschrieben ist. Das in dieser Patentanmeldung beschriebene Verfahren, welches bevorzugt zur Herstellung der erfindungsgemäßen integrierten Schaltungsanordnung eingesetzt wird, führt eine Erstellung eines Layouts mittels eines automatisierten Verfahrens durch, bei dem mindestens zwei logisch getrennte Teilsysteme (Funktionsgruppen) vorgesehen sind, und neben der logischen Trennung zusätzlich eine räumliche (physikalische) Trennung der Teilsysteme auf der zur Verfügung stehenden Fläche der Schaltungsanordnung vorgenommen wird.

Die auf dem gemeinsamen Chip oder Chipträger angeordneten, paarweise oder mehrfach vorhandenen Funktionsgruppen, wie Überwachungsschaltungen, Spannungsüberwachungen, Watchdog etc., sind bevorzugt elektrisch so miteinander und/oder mit einem Aktuator verbunden, dass jeweils der Ausfall einer Funktionsgruppe durch die zum Paar gehörende andere Funktionsgruppe und/oder durch ein an beide zum Paar gehörenden Funktionsgruppen angeschlossenes Bauelement (z.B. Aktuatortreiber) bemerkt wird. Auf diese Weise kann, z.B. wenn eine Störung in den Leitungsverbindungen der beiden Schaltungen vorliegt, der entsprechende Aktuatortreiber abgeschaltet werden.

Mit der Erfindung wird somit vorteilhafterweise eine Reduzierung der Bauteilanzahl erreicht, wodurch sich neben geringeren Kosten vor allem eine verbesserte Ausfallrate und Zuverlässigkeit ergibt.

Weitere bevorzugte Ausführungsformen ergeben sich aus den Unteransprüchen, der nachfolgenden Beschreibung der Figuren.

Es zeigen
- Fig. 1: eine Schaltungsanordnung einer Regelelektronik nach dem Stand der Technik,
- Fig. 2: eine Schaltungsanordnung für ein beispielgemäßes Mikrorechnersystem,
- Fig. 3: schematische Darstellungen eines Beispiels zur Realisierung von Leitungsdurchführungen zwischen getrennten Funktionsblöcken in der Schaltungsanordnung gemäß Fig. 2 und
- Fig. 4: eine schematische Darstellung eines Beispiels für die Ausführung der Schaltungsanordnung im Bereich eines Ventiltreibers (MD).

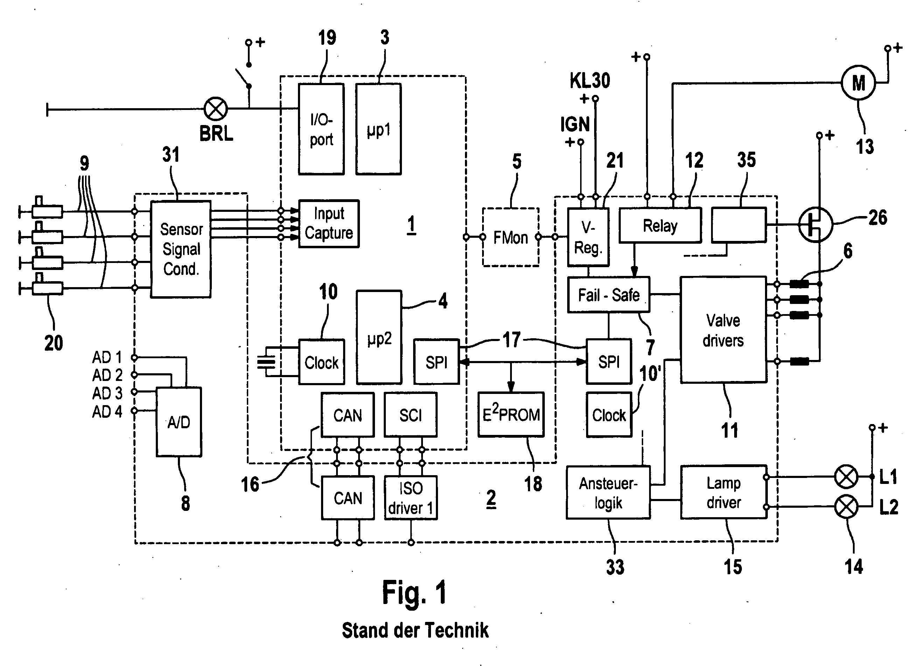

Die Schaltungsanordnung in Fig. 1 umfasst alle notwendigen Funktionsgruppen eines sicherheitsoptimierten, an sich bekannten, und vielfach in heutigen Kraftfahrzeugen eingesetzten universellen ABS-, ASR- und ESP-Steuergeräts. Die gestrichelten Linien stehen für voneinander abgetrennte Bereiche 1, 2 und 5. Diese symbolisieren drei voneinander getrennte, separat eingehäuste integrierte Schaltkreise (Chips), welche auf einem nicht dargestellten gemeinsamen Leiterbahnträger angeordnet sind.

Die für den Betrieb notwendigen Funktionsgruppen sind unter anderem ein integriertes Mikroprozessorsystem 1, welches in einem ersten Chip angeordnet ist, eine integrierte Leistungselektronik 2, welche in einem zweiten Chip angeordnet ist, und eine Sicherheitsschaltung 5. Mikroprozessorsystem 1 umfasst im wesentlichen einen ersten Mikroprozessor 3 und einen zweiter Mikroprozessor 4. Neben Chip 1 ist Failsafe-Modul 7 zur Überwachung der Chips 1 und 2 vorgesehen.

In Chip 2 sind die Endstufentreiber 11 zur Ansteuerung der Magnetventile 6 zusammengefasst. Ferner umfasst die Schaltungsanordnung eingangsseitig einen A/D-Wandler 8, eine Sensorsignalaufbereitungseinheit 31, die mit Raddrehzahlsensoreingang 9 und Raddrehzahlsensoren 20 verbunden ist. Weiterhin sind dort Oszillatoren 10, 10', Relais 12 zum Schalten von Pumpenmotor 13, Warnlampentreiber 15 zur Ansteuerung von Warnlampen 14, CAN-Treiber 16, SPI-Treiber 17, EEPROM 18, Eingabe-/Ausgabe-Ports 19, Spannungsregler 21, sowie redundante elektronische Schaltelemente 26 zur Abschaltung der Ventilspulen 26 (MD) zusammengefasst.

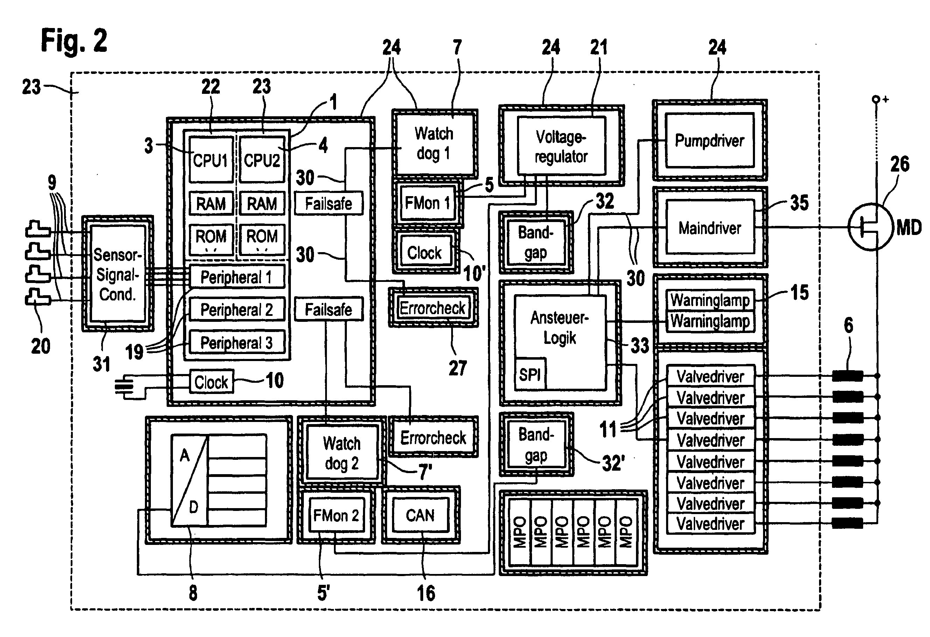

In Fig. 2 ist ein Beispiel für einen Mikrokontroller 23 gemäß der Erfindung dargestellt, welches die Besonderheit aufweist, dass alle Funktionsgruppen für ein Fahrdynamikregelungssystem (für ABS, ESP etc.) auf einem gemeinsamen Siliziumchip 23 als sogenanntes "single chip"-System angeordnet sind. Bei den Funktionsgruppen handelt es sich im Prinzip immer um eigenständige integrierte Schaltungen. Mikrokontroller 23 umfasst ein redundantes Mikroprozessorsystem 1 mit einem ersten Mikrorechner 22 und zweiten Mikrorechner 23, welche, je nach dem vorhandenen Redundanzkonzept (Kernredundanz, symmetrische Redundanz, asymmetrische Redundanz), über einen nichtgezeichneten seriellen oder parallelen Datenbus miteinander verbunden sind. Über diesen Datenbus können die Mikrorechner Daten zur Überprüfung deren korrekten Funktion austauschen bzw. sich gegenseitig bei einer Fehlfunktionen aktivieren bzw. sich oder das ganze System abschalten.

Mikrokontroller 2 umfasst weiterhin die Funktionsgruppen A/D-Wandler 8, Ventiltreiber (PWM oder Digital) 11, allgemeine Signalverarbeitungseinheit 31 für Sensoren (insbesondere Rad-, und/oder Drucksensoren), Warnlampentreiber 15, Spannungsversorgung 21, Sicherheitsschaltung 5, 5', 7, 7', 27, wie zum Beispiel Watchdog bzw. Funktionsgruppen zur Spannungsüberwachung der äußeren Betriebsspannungen (FMon), redundante Spannungsreferenzen 32, 32' (z.B. Bandgap-Referenzen), Ansteuerlogik 33 für die Leistungstreiberstufen.

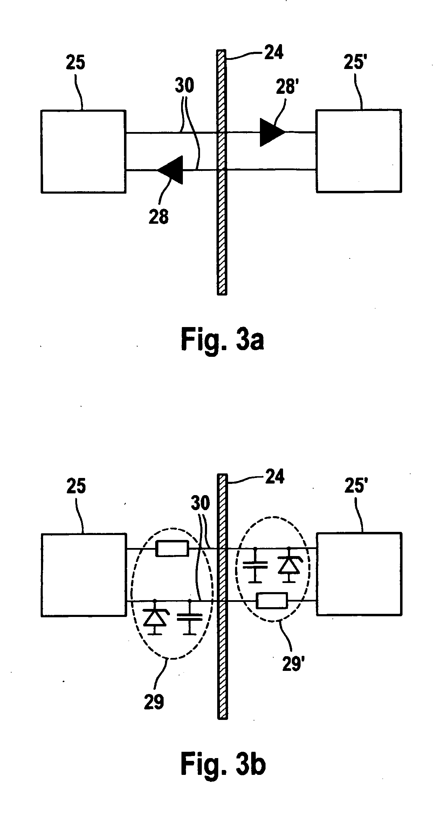

Die im vorstehenden Absatz beschriebenen Funktionsgruppen welche in den Figuren 3 a) und b) noch einmal am Beispiel von zwei Funktionsgruppen vergrößert dargestellt sind, sind durch Isolationszonen 24, zum Beispiel Guardringe oder Trenches (Gräben), voneinander so isoliert, dass defekte Schaltungsteile keinen Einfluss auf benachbarte Funktionsblöcke haben. Außerdem sind die Funktionsgruppen auf dem Chip bevorzugt so angeordnet, dass redundante Funktionen physikalisch (räumlich und/oder elektrisch) auf dem Chip möglichst weit voneinander getrennt sind. Hierdurch kann eine Wechselwirkung der baugleichen Gruppen auf Grund einer Funktionsstörung -wie etwa durch thermische Überlastung oder ESD-Einwirkung verursacht- verhindert werden.

In Fig. 3 sind in einer Prinzipdarstellung zwei elektrisch miteinander verbundene Funktionsgruppen 25 und 25' gezeichnet, welche durch Isolationszonen 24 voneinander isoliert sind. Die elektrischen Leitungen 30 verbinden die Funktionsblöcke miteinander und sind dazu wie Brücken über die Isolationszonen 24 hinweggeführt. Um Sicherheitsnachteile aufgrund von Leitungsverbindung zu vermeiden, ist eine zusätzliche elektrische Trennung der Funktionsgruppen vorgesehen. Deshalb sind Leitungen 30 so ausgeführt, dass bei einem Fehler von Funktionsgruppe 25 keine Rückwirkung auf die Funktionsgruppe 25' bzw. umgekehrt möglich ist. Hierzu sind in die Leitungen unidirektionale Puffer 28, 28' (Fig. 3a) oder ESD-Schutzstrukturen 29, 29' (Fig. 3b) eingefügt.

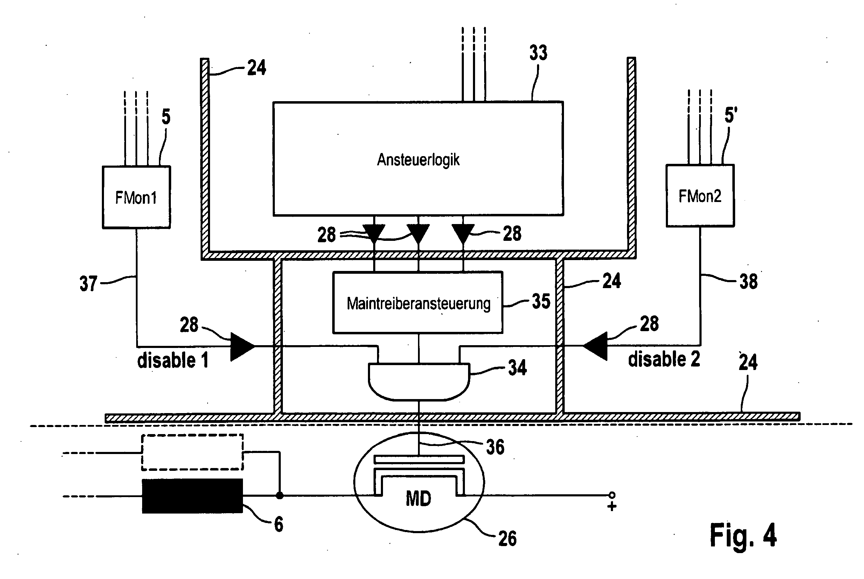

In Fig. 4 ist der Bereich der Chipfläche 23 dargestellt, auf dem sich die in Fig. 2 erwähnten Überwachungsschaltungen 5 und 5' (FMon zur Überwachung der Betriebsspannung) befinden. Entsprechend dem Beispiel in Fig. 3b) ist eine Leitung 38 vorgesehen, welche über Schutzstruktur 24 führt und einen Puffer 28 enthält. Überwachungsschaltung 5 ist über Leitung 37 mit UND-Gatter 34 verbunden. Entsprechend ist die redundante Überwachungsschaltung 5' über Leitung 38 mit UND-Gatter 34 verbunden. Ein weiterer Eingang des UND-Gatters ist mit Treiberansteuerelektronik 35 zur Ansteuerung des Hauttreibers 26 (MD) verbunden.

Tritt beispielsweise eine Störung in den Leitungsverbindungen der beiden Schaltungen 5 und 5' auf, wird die Signalleitung 36 bei Ansteuerung des Haupttreibers 26 durch Haupttreiberansteuerung 35 nicht mit einem elektrischen Signal beaufschlagt. An Leitung 36 liegt nur dann ein Signal an, wenn alle Eingänge des UND-Gatters mit einem Signal beaufschlagt sind. Ein Ausfall einer Überwachungsschaltung 5 oder 5' bzw. ein durch diese Schaltung festgestellter Fehler führt somit zur Sperrung des Haupttreibers 26 und damit zur Abschaltung des Ventils 6.

## Patentansprüche

1. Integrierte Schaltungsanordnung für sicherheitskritische Anwendungen umfassend mehrere elektronische, zusammenwirkende, auf einem gemeinsam Chip oder Chipträger (23) vereinte Funktionsgruppen (25, 25') erster und zweiter Art, wobei elektrische Leitungen (30) vorhanden sind, die die Funktionsgruppen (25, 25') miteinander verbinden, wobei die Funktionsgruppen der ersten Art zumindest die Funktionsgruppe redundantes Mikroprozessorsystem (1) und die Funktionsgruppen zweiter Art zumindest die Funktionsgruppen Aktuatortreiber (11, 15, 24, 35) und Sicherheitsschaltkreise (5, 5', 7, 7') umfassen,
**dadurch gekennzeichnet, dass**
das Mikroprozessorsystem die Funktionsgruppen erster Art und die Funktionsgruppen zweiter Art, welche im wesentlichen analoge Schaltungskomponenten zur Ansteuerung von leistungsfähigen Verbrauchern sind, so miteinander vernetzt, dass eine individuelle Sicherheitsüberwachung der einzelnen Funktionsgruppen ermöglicht wird und dass die Funktionsgruppen zumindest teilweise durch isolierte Bereiche voneinander geschützt sind.

2. Schaltungsanordnung nach Anspruch 1, **dadurch gekennzeichnet, dass** das redundante Mikroprozessorsystem ein kernredundantes Mikrokontroller-System oder ein Mikrokontroller-System mit symmetrischer Redundanz oder ein Mikrokontroller-System mit asymmetrischer Redundanz ist.

3. Schaltungsanordnung nach Anspruch 1 oder 2, **dadurch gekennzeichnet, dass** die elektrischen Leitungen (30), die von einer ersten Funktionsgruppe (25) zu einer zweiten Funktionsgruppe (25') führen, mittels Pufferelement/-en (28) und/oder ESD-Schutzstrukturen (29, 29') vor fehlererzeugenden Ereignissen der Nachbarfunktionsgruppe/-n und/oder vor fehlererzeugenden äußeren Einflüssen geschützt sind.

4. Schaltungsanordnung nach mindestens einem der Ansprüche 1 bis 3, **dadurch gekennzeichnet, dass** die elektrischen Leitungen auf mindestens einer oder jeder Seite eines isolierten Bereichs, welche einer Funktionsgruppe zugewandt ist, ein Pufferelement und/oder eine ESD-Schutzstruktur aufweisen.

5. Schaltungsanordnung nach mindestens einem der Ansprüche 1 bis 4, **dadurch gekennzeichnet, dass** ein Teil der Funktionsgruppen zwei oder mehrfach redundant ausgeführt ist (5, 5') und bei einer Fehlfunktion der redundant ausgeführten Funktionsgruppe (5) eine andere, gleichartige Funktionsgruppe (5') die Funktion der fehlerhaften Funktionsgruppe übernimmt, wobei zu diesem Zweck Signalleitungen (37, 38) und Logikkomponenten (34) vorgesehen sind, welche entweder ein Abschalten der fehlerhaften Funktion bewirken oder welche ein Umschalten der Funktion auf die fehlerfrei funktionierende Funktionsgruppe (5') gewährleisten.

6. Verwendung der Schaltungsanordnung gemäß den Ansprüchen 1 bis 5 in elektronischen Bremssystemen für Kraftfahrzeuge oder in elektronischen Steuerungen zur Regelung der Fahrdynamik von Kraftfahrzeugen oder zur Steuerung von elektronisch gesteuerten Feststellbremsen oder zur Steuerung von Fahrzeugrückhaltesystemen, wie beispielsweise Airbagsteuerungen.

## Claims

1. Integrated circuit arrangement for safety-critical applications, comprising a plurality of electronic, interacting function groups (25, 25') of a first and second type, which are combined on a common chip or chip carrier (23), wherein electrical lines (30) are provided which connect the function groups (25, 25') to one another, wherein the function groups of the first type comprise at least the redundant microprocessor system function group (1) and the function groups of the second type comprise at least the actuator driver function groups (11, 15, 24, 35) and the safety circuits (5, 5', 7, 7'),
**characterized in that**
the function groups of the first type and the function groups of the second type, which are essentially analogue circuit components for actuating high-performance loads, are interconnected to one another by the microprocessor system in such a way that individual safety monitoring of the individual function groups is made possible, and **in that** the function groups are at least partially protected from one another by insulated regions.

2. Circuit arrangement according to Claim 1, **characterized in that** the redundant microprocessor system is a core-redundant microcontroller system or a microcontroller system with symmetrical redundancy or a microcontroller system with asymmetrical redundancy.

3. Circuit arrangement according to Claim 1 or 2, **characterized in that** the electrical lines (30) which lead from a first function group (25) to a second function group (25') are protected, by means of a buffer element or buffer elements (28) and/or ESD protective structures (29, 29'), against fault-generating events of the adjacent function group or groups and/or against fault-generating external influences.

4. Circuit arrangement according to at least one of Claims 1 to 3, **characterized in that** the electrical lines have a buffer element and/or an ESD protective structure on at least one side, or each side, of an insulated region, which side faces a function group.

5. Circuit arrangement according to at least one of Claims 1 to 4, **characterized in that** some of the function groups are embodied with double or multiple redundancy (5, 5'), and in the event of a malfunction in the function group (5) which is embodied with redundancy another function group (5') of the same type assumes the function of the faulty function group, wherein, for this purpose, signal lines (37, 38) and logic components (34) are provided which either cause the faulty function to be switched off or ensure that the function is switched over to the function group (5') which is functioning without faults.

6. Use of the circuit arrangement according to Claims 1 to 5 in electronic brake systems for motor vehicles or in electronic controllers for regulating the vehicle movement dynamics of motor vehicles or for controlling electronically controlled parking brakes or for controlling vehicle restraint systems such as, for example, airbag controllers.

## Revendications

1. Ensemble intégré de circuit pour applications où la sécurité est un élément critique,
comprenant plusieurs groupes électroniques fonctionnels (25, 25') d'un premier et d'un deuxième type qui coopèrent et sont rassemblés sur une puce commune ou sur un porte-puces (23) commun,
des conducteurs électriques (30) étant prévus pour relier mutuellement les groupes fonctionnels (25, 25'),
les groupes fonctionnels du premier type comprenant au moins un groupe fonctionnel qui forme un système de microprocesseur redondant (1) et les groupes fonctionnels du deuxième type comprenant au moins des groupes fonctionnels qui sont des pilotes d'actionneur (11, 15, 24, 35) et des circuits de sécurité (5, 5', 7, 7'),
**caractérisé en ce que**
le système de microprocesseur relie en réseau les groupes fonctionnels du premier type et les groupes fonctionnels du deuxième type qui sont des composants de circuit essentiellement analogiques qui commandent des consommateurs de puissance, de manière à permettre une surveillance séparée de la sécurité des différents groupes fonctionnels et à protéger les uns des autres au moins en partie les groupes fonctionnels par des zones isolées.

2. Ensemble de circuit selon la revendication 1, **caractérisé en ce que** le système redondant de microprocesseur est un système de microcontrôleur à âme redondante, un système de microcontrôleur à redondance symétrique ou un système de microcontrôleur à redondance asymétrique.

3. Ensemble de circuit selon les revendications 1 ou 2, **caractérisé en ce que** les conducteurs électriques (30) qui conduisent d'un premier groupe fonctionnel (25) à un deuxième groupe fonctionnel (25') sont protégés au moyen d'un ou plusieurs éléments tampon (28) et/ou des structures de protection ESD (29, 29') des événements sources d'erreur du ou des groupes fonctionnels voisins et/ou d'influences extérieures sources d'erreur.

4. Ensemble de circuit selon au moins l'une des revendications 1 à 3, **caractérisé en ce que** les conducteurs électriques présentent un élément tampon et/ou une structure de protection ESD sur au moins un côté ou sur chaque côté d'une zone isolée qui est tourné vers un groupe fonctionnel.

5. Ensemble de circuit selon au moins l'une des revendications 1 à 4, **caractérisé en ce qu'**une partie des groupes fonctionnels est deux ou plusieurs fois redondante (5, 5') et **en ce qu'**en cas de fonctionnement défectueux du groupe fonctionnel (5) redondant, un autre groupe fonctionnel (5') de même type assure la fonction du groupe fonctionnel défectueux et **en ce que** dans ce but sont prévus des conducteurs de signalisation (37, 38) et des composants logiques (34) qui soit ont pour effet un débranchement de la fonction défectueuse soit assurent un basculement de la fonction sur le groupe fonctionnel (5') qui fonctionne sans défaut.

6. Utilisation d'un ensemble de circuit selon les revendications 1 à 5 dans des systèmes électroniques de freinage de véhicules automobiles ou dans des commandes électroniques de régulation de la dynamique de roulage de véhicules automobiles, pour la commande de freins de stationnement à commande électronique ou pour la commande de systèmes de retenue prévus dans le véhicule, par exemple la commande de coussins gonflables de sécurité.
